# EUROPÄISCHE PATENTSCHRIFT

(11) **EP 2 185 449 B1**
(45) Veröffentlichungstag und Bekanntmachung des Hinweises auf die Patenterteilung: **07.09.2011**
(21) Anmeldenummer: 09749567.5
(22) Anmeldetag: 13.05.2009
(51) Int. Cl.: B65G 47/96

(54) **SORTIERSYSTEM MIT EINEM VERTIKALSORTER**
SORTING SYSTEM HAVING A VERTICAL SORTER
SYSTÈME DE TRI COMPRENANT UN DISPOSITIF DE TRI VERTICAL

(30) Priorität: 21.05.2008 DE 102008024586
(43) Veröffentlichungstag der Anmeldung: 19.05.2010
(73) Patentinhaber: BEUMER GmbH & Co. KG, 59269 Beckum (DE)
(72) Erfinder: BRUNSEN, Hermann, 59269 Beckum (DE); HEITPLATZ, Heino, 48317 Drensteinfurt (DE); HINTZ, Andreas, 8952 Schlieren (CH)
(74) Vertreter: Schütte, Hartmut
(86) Internationale Anmeldenummer: PCT/EP2009/003379
(87) Internationale Veröffentlichungsnummer: WO 2009/141077

(56) Entgegenhaltungen:
- EP-A- 0 556 159
- EP-A- 1 196 341
- EP-A- 1 353 087
- WO-A-00/02802
- WO-A-98/08759
- CH-A- 111 897
- DE-A1- 2 243 338
- DE-A1- 3 346 802
- DE-A1- 3 530 624
- GB-A- 2 153 772
- US-A- 5 247 778
- US-A1- 2003 221 935

## Beschreibung

Die vorliegende Erfindung betrifft ein Sortiersystem mit einem Vertikalsorter, insbesondere zur Förderung und Sortierung von Stückgütern, so wie sie beispielsweise zur Förderung und Sortierung von Paketen oder zur Sortierung von Gepäckstücken an Flughäfen verwendet werden.

Solche Vertikalsorter sind Liniensorter, bei denen eine vertikale Umlenkung an den Enden der Förderlinie erfolgt. Die vertikale Umlenkung erfolgt dabei um eine etwa horizontale Achse. Vertikalsorter verfügen in der Regel über eine Mehrzahl hintereinander vorgesehener Fahrwagen, denen jeweils eine Kippschale oder ein Quergurtförderer zugeordnet ist, um an vorbestimmten oder wählbaren Stellen entlang des Transportweges die geförderten Stückgüter auszusortieren und dem Weitertransport zuzuführen.

Vertikalsorter bieten gegenüber Sortiersystemen, die Horizontalkurven durchfahren, den Vorteil, dass eine geschlossene oder wenigstens nahezu geschlossene Förderebene bereitgestellt werden kann, was die Förderung von größeren Stückgütern, die sich über mehr als eine Sortiereinheit erstrecken erleichtert.

Bei Horizontalsortern mit Horizontalkurven hingegen können von den Stückgütern abstehende Teile, Riemen oder Schlaufen gegebenenfalls zwischen zwei Fördereinheiten gelangen und sich dort festklemmen, was zu einer Beschädigung der Stückgüter oder sogar zu einem Ausfall des Sortiersystems führen kann.

Vertikalsorter bieten hier den Vorteil einer durchgängigen Förderfläche, bei der ein Einklemmen abstehender Stückgutteile weitgehend vermieden wird.

Es sind verschiedene Sortiersysteme mit Vertikalsortern im Stand der Technik bekannt geworden. Meist werden die einzelnen Sortiereinheiten der Sortiersysteme am vorderen und hinteren Ende jeweils gelenkig miteinander verbunden, sodass sich insgesamt ein geschlossener Förderstrang ergibt, der eine Förderkette bildet, wobei jede Sortiereinheit Laufräder aufweist, die sich an entsprechenden Stützschienen des Sortiersystems abstützt. Jede Stützeinheit bildet mit den zugehörigen Laufrädern sozusagen ein Kettenglied der Förderkette.

Nachteilig bei diesen Sortiersystemen ist der sogenannte Polygoneffekt, der sich an den vertikalen Endumlenkungspunkten ergibt, wenn die Förderkette umgelenkt wird. Das Umlenkungsrad weist einen kreisförmigen Durchmesser auf, während der Strang der Sortiereinheiten nur ein Polygon durchlaufen kann. Der Einfluss des Polygoneffekts wird geringer, wenn jede einzelne Sortiereinheit eine geringere Länge aufweist. Dadurch steigt aber der Aufwand, da die Anzahl der Sortiereinheiten entsprechend vergrößert werden muss.

Weiterhin ist mit der WO 98/08759 A ein Sortierer mit bandgetragenen Kippschalen bekannt geworden, mit der Merkmalen des Obergriffs des Anspruch 1, bei dem die einzelnen Kippschalen in Längsrichtung beabstandet voneinander angeordnet sind. Die Kippschalen liegen auf einem elastischen Förderband auf, welches von einem Gleitbett unterstützt wird, um die Tragekräfte aufzunehmen und abzuleiten.

Zur Aussortierung der Stückgüter werden bei diesem bekannten System bewegliche Auslöseglieder verwendet, die in die Wegbahn eines Stellgliedes gebracht werden können, um eine einseitige Anhebung der Kippschale zu bewirken und das Stückgut abzuwerfen.

Nachteilig bei diesem bekannten System ist der mechanisch gesteuerte Abwurf der Stückgüter, da die Geschwindigkeit der Kippschalensteuerung von der Fortbewegungsgeschwindigkeit des Vertikalsorters abhängt. Außerdem tritt eine erhebliche akustische Belastung durch das Auftreffen des beweglichen Auslösegliedes auf das Stellglied der Kippschale auf.

Ein weiterer Nachteil des bekannten Standes der Technik ist die Flexibilität des Endlosförderbandes, bei dem nur eine begrenzte Vorspannung eingesetzt werden kann, da die Elastizität zu einer Dehnung des Förderbandes führt, die mit zunehmender Betriebszeit noch weiter ansteigt.

Vor dem Hintergrund des geschilderten Standes der Technik ist es die Aufgabe der vorliegenden Erfindung, ein Sortiersystem mit einem Vertikalsorter zu Verfügung zu stellen, der den Polygoneffekt weitgehend vermeidet und eine hohe Fördergeschwindigkeit bei höchsten Gewichtsbelastungen ermöglicht.

Diese Aufgabe wird gelöst durch das Sortiersystem mit den Merkmalen des Anspruchs 1. Bevorzugte Weiterbildungen der Erfindung sind Gegenstand der Unteransprüche. Weitere Vorteile und Merkmale der Erfindung sind in dem Ausführungsbeispiel angegeben.

Das erfindungsgemäße Sortiersystem mit einem Vertikalsorter ist insbesondere zur Förderung und Sortierung von Stückgütern vorgesehen und umfasst eine Mehrzahl von in vorbestimmten Abständen zueinander vorgegebenen Sortiereinheiten, die sich über einen geschlossenen Fördergurt entlang einer Wegbahn erstrecken und mit dem Fördergurt verbunden und entlang der Wegbahn bewegbar sind. Wenigstens zwei Umlenktrommeln mit horizontalen Drehachsen sind vorgesehen. Wenigstens eine Umlenktrommel dient als Antriebstrommel, um den im Wesentlichen horizontal angeordneten Fördergurt und die daran vorgesehenen Sortiereinheiten um die horizontal ausgerichteten Drehachsen umzulenken und anzutreiben. Der Fördergurt ist als Zugträger ausgebildet und dazu mit Verstärkungsmitteln verstärkt, um die Sortiereinheiten anzutreiben. Wenigstens eine Sortiereinheit weist wenigstens eine Fahreinrichtung mit Laufrädern auf. Wenigstens eine und insbesondere alle Sortiereinheiten sind an dem Fördergurt an zwei in Längsrichtung beabstandeten Verbindungsstellen befestigt. Dabei sind die Sortiereinheiten an ersten verbindungsstellen ortsfest aber drehbeweglich und an zweiten Verbindungsstellen längsverschieblich an den Zugträger gekoppelt. Die Sortiereinheit weist wenigstens eine Stückgutaufnahme auf, von der ein aufgenommenes Stückgut gesteuert abwerfbar ist. Gegebenenfalls werden die Sortiereinheiten und die sich darauf eventuell befindlichen Stückgüter von dem Zugträger getragen.

Die Erfindung hat viele Vorteile. Ein erheblicher Vorteil der Erfindung ist, dass der Fördergurt als Zugträger ausgebildet ist, der sowohl die Zugkräfte zum Transport der Fördereinheiten aufbringt als auch die Fördereinheiten und die darauf angeordneten Stückgüter trägt. Das wird ermöglicht, indem der an sich flexible Fördergurt mit Verstärkungsmitteln insbesondere in Längsrichtung verstärkt ist, sodass der Fördergurt auch bei hohen Vorspannungen eine geringe Dehnung aufweist. Das ist sehr vorteilhaft, da sich entlang des Umfangs der Wegbahn örtlich unterschiedliche Vorspannungen ergeben können, die bei einer hohen Dehnbarkeit des Zugträgers zu örtlich schwankenden Dehnungen führt, wodurch die Abstände der einzelnen Sortiereinheiten voneinander zeitlich und örtlich variieren können. Die Erfindung ermöglicht hier einen konstanten und gleichbleibenden Abstand der einzelnen Sortiereinheiten, wodurch eine im Wesentlichen durchgängige Förderebene ermöglicht wird.

Ein weiterer Vorteil ist, dass ein Polygoneffekt stark reduziert oder vermieden wird und eine hohe Belastbarkeit ermöglicht wird. Dadurch werden durch Polygoneffekte hervorgerufene schwellende Spannungsschwankungen im Zugträger vermieden, wodurch die mechanischen Belastungen, sowie Schwingungen und Geräuschentwicklungen reduziert werden. Das führt zu einer geringeren mechanischen Belastung des Antriebs und geringen Geräuschbelastungen.

Unter einer horizontal ausgerichteten Drehachse ist im Sinne dieser Anmeldung eine Drehachse einer Drehtrommel eines Vertikalsorters zu verstehen. Eine solche Drehachse kann exakt waagerecht ausgerichtet sein. Die Drehachse kann aber auch eine Neigung von z.B. einigen Grad zur waagerechten Richtung aufweisen.

Vorzugsweise ist jeder Sortiereinheit ein Motor zugeordnet, der zu einer motorgesteuerten Betätigung der Stückgutaufnahme dient, um von jeder Stückgutaufnahme individuell gesteuert das zugehörige Stückgut auszusortieren bzw. abzuwerfen.

In bevorzugten Weiterbildungen der Erfindung besteht der Fördergurt aus einem elastischen und mit den Verstärkungsmitteln versehenen Material, um eine hohe Festigkeit und Vorspannung bei geringer Dehnung des Fördergurts zu ermöglichen. Dadurch werden auch bei hohen und höchsten Belastungen des Sortiersystems gleichbleibende Bedingungen gewährleistet, da die Dehnung aufgrund der insbesondere eingebetteten Verstärkungsmittel nur gering ist.

Die Verstärkungsmittel können eine Vielzahl benachbarter Verstärkungsseile umfassen oder als eine Vielzahl benachbarter Verstärkungsseile ausgebildet sein, welche in Längsrichtung angeordnet sind und sich insbesondere in Längsrichtung vollständig um die Wegbahn herum erstrecken.

Die Enden der Verstärkungsseile sind vorzugsweise miteinander verbunden. Beispielsweise kann die Verbindung als Schraubverbindung ausgeführt sein, wobei die beiden Enden an einer Klemmstelle zusammengepresst und miteinander verklemmt werden.

Es ist möglich, dass als Verstärkungsmittel Verstärkungsseile eingesetzt werden, die aus miteinander verzwirbelten oder verflochtenen Adern bestehen. Möglich ist es aber auch, dass sonstige Verstärkungsseile oder Verstärkungsadern eingesetzt werden. Verstärkungsmittel aus mehradrigen Fasern werden im Sinne dieser Anmeldung auch als Verstärkungsseil bezeichnet.

In besonders bevorzugten Ausgestaltungen umfassen die Verstärkungsmittel wenigstens ein Stahlseil und insbesondere eine Mehrzahl an Stahlseilen, die in den als Zugträger ausgebildeten Fördergurt insbesondere eingebettet sind.

Der Einsatz von Stahlseilen bietet erhebliche Vorteile, da damit Fördergurte mit höchsten Belastungsmöglichkeiten zur Verfügung gestellt werden können.

Während das elastische Material des Fördergurts insbesondere aus Gummi oder dergleichen besteht und somit eine gute Haftung auf dem Antriebssystem erlaubt, stellen die Stahlseile eine geringe Dehnung des Fördergurts in Längsrichtung sicher. Durch die Einbettung des Stahlseils werden die äußeren Eigenschaften des elastischen Materials so wie beispielsweise Gummi erhalten, während andererseits die Festigkeitseigenschaften des Stahlseils positiv zu den Eigenschaften des Zugträgers beitragen.

Es ist auch möglich, dass die Verstärkungsmittel wenigstens ein Verstärkungsseil aus Verstärkungsfasern umfassen. Beispielsweise können Faserwerkstoffe eingesetzt werden, wie sie beispielsweise zur Herstellung von Faserverbundwerkstoffen eingesetzt werden. Möglich ist beispielsweise der Einsatz von Carbon-, Kevlar- und Glasfasern oder dergleichen als Verstärkungsfasern in dem Fördergurt. Auch solche Fasern erlauben eine hohe Festigkeit in Längsrichtung.

In allen Ausgestaltungen des erfindungsgemäßen Sortiersystems sind die Sortiereinheiten an wenigstens einer Stelle vorzugsweise fest mit dem Fördergurt verbunden. Insbesondere sind die Sortiereinheiten an den Befestigungsstellen über eine Mehrzahl an Schrauben mit dem Fördergurt verschraubt.

Besonders bevorzugt sind die Sortiereinheiten an wenigstens einigen zweiten Verbindungsstellen jeweils auch drehbeweglich an den Zugträger gekoppelt. In besonders bevorzugten Ausgestaltungen und Weiterbildungen sind die Sortiereinheiten an zweiten Verbindungsstellen jeweils drehbeweglich und längsverschieblich an den Zugträger gekoppelt, während sie an ersten Verbindungsstellen ortsfest, aber drehbeweglich mit dem Zugträger verbunden oder gekoppelt sind.

Insbesondere bei Einsatz einer Mehrzahl von parallelen Verstärkungsseilen, die sich in Längsrichtung des Fördergurts erstrecken, können die Befestigungsschrauben für die Sortiereinheiten zwischen einzelnen Seilen durch den Fördergurt geschraubt werden und hintergreifen mit den Schraubenköpfen und/oder Unterlegteilen zwei oder mehr der Verstärkungsseile, wodurch sich ein fester und zuverlässiger Sitz der Sortiereinheiten an dem Fördergurt ergibt, der auch hohen und höchsten Belastungen Stand hält.

Insbesondere an den Umlenkungspunkten an den Kopfenden des Vertikalsorters entstehen hohe Fliehkräfte bei den gewünschten hohen Transportgeschwindigkeiten, die hier 10 m/s oder mehr erreichen können. Da die einzelnen Sortiereinheiten aufgrund der daran vorgesehenen Mechanik und des insbesondere elektrischen Motorantriebs über ein beträchtliches Eigengewicht verfügen, ist eine entsprechende Stabilität der Befestigung der Sortiereinheit an dem Fördergurt nötig, um die gewünschten Förder- und Sortiergeschwindigkeiten zu erzielen.

In bevorzugten Weiterbildungen ist jede Sortiereinheit jeweils im Bereich der beiden Längsenden mit dem Fördergurt verbunden. Dabei wird eine Anbindung mit einem festen Drehpunkt vorzugsweise im Bereich des Zugträgers ausgeführt, während die andere Anbindung nur eine Fixierung in senkrechter Richtung am Fördergurt darstellt. An dieser Anbindung ist somit ein Längenausgleich in Förderrichtung möglich, was insbesondere Vorteile bei der Gurtumlenkung bringt. Durch die beschriebene Art der Anbindung können die auf die Fahreinrichtungen und Stückgutaufnahmen wirkenden Beschleunigungen beim Auflaufen und beim Ablaufen auf die Umlenktrommeln im Gegensatz zu einer festen Anbindung deutlich reduziert werden. Dadurch wird eine besonders zuverlässige Verbindung der Sortiereinheit mit dem Fördergurt erzielt.

Insbesondere verfügen die Sortiereinheiten jeweils über eine Fahreinrichtung, die mit ihren Längsenden an dem Fördergurt verbunden ist. Auf der Fahreinrichtung befindet sich die Stückgutaufnahme, die sich insbesondere über eine größere Länge als die Länge der Fahreinrichtung an dem Fördergurt erstreckt, sodass trotz der doppelten Befestigung der Fahreinrichtung an dem Fördergurt sich nur ein geringer oder im beschriebenen bevorzugten Befestigungsfall kein Polygoneffekt an den Umlenkungspunkten ergibt.

Bei dieser Ausgestaltung ist der Abstand der Verbindungsstellen einer Sortiereinheit mit dem Fördergurt in Längsrichtung um wenigstens 10, insbesondere um wenigstens 20 % kürzer als die Länge der Stückgutaufnahme in Förderrichtung. In bevorzugten Ausgestaltungen kann der Abstand der Befestigungsstellen an dem Fördergurt kleiner als die Hälfte der Länge der Stückgutaufnahme ausgebildet sein.

In allen Ausgestaltungen ist wenigstens eine Stückgutaufnahme und insbesondere sind alle Stückgutaufnahmen als Kippschale ausgebildet, welche mittels des Motors von einer Transportstellung in eine zu wenigstens einer Seite geneigten Abwurfstellung bzw. Aussortierstellung bringbar ist. Insbesondere ist jede Stückgutaufnahme zu beiden Seiten neigbar, sodass eine Aussortierung des aufgenommenen Stückguts in Transportrichtung sowohl zur einen als auch zur anderen Seite möglich ist. Das verdoppelt die Sortiermöglichkeit des Sortiersystems, da nicht nur auf der einen, sondern auch auf der anderen Seite des Sortiersystems eine entsprechende Anzahl an Abgabestationen vorgesehen sein kann.

In allen zuvor beschriebenen Ausgestaltungen bildet die Förderfläche der Stückgutaufnahmen der Sortiereinheiten vorzugsweise im Obertrum eine im Wesentlichen geschlossene Förderfläche. Dadurch wird es ermöglicht, dass auch Stückgüter sortiert werden können, deren Länge die Länge einer einzelnen Stückgutaufnahme erheblich überschreitet. In solchen Fällen werden zwei, drei oder mehr Sortiereinheiten parallel angesteuert und geben das aufgenommene Stückgut synchron ab. Gegebenenfalls erfolgt eine zeitlich versetzte Abgabe, wodurch eine Drehbewegung des Stückgutes erreicht wird und dieses sich maximal in Querrichtung zur Sorterachse bzw. Sorterlängsrichtung ausrichtet.

In bevorzugten Ausgestaltungen können im Untertrum des Vertikalsorters wenigstens zwei Gurtwendestationen vorgesehen sein, um eine zusätzliche Sortierung im Untertrum zu ermöglichen, wobei dann sowohl die Aufgabe der Güter als auch die Abgabe der Güter auf dem Weg zur nächsten Gurtwendestation im Untertrum erfolgt. Insgesamt wird dadurch die Kapazität des Sortiersystems erhöht.

In bevorzugten Weiterbildungen und Ausgestaltungen ist an wenigstens einer Sortiereinheit wenigstens ein gegenläufig zur Förderrichtung laufendes Transportband vorgesehen. Vorzugsweise ist jeder Sortiereinheit ein Transportband zugeordnet oder es sind zwei Transportbänder einer Sortiereinheit zugeordnet. Das Transportband oder die beiden Transportbänder sind vorzugsweise seitlich neben dem Fördergurt angeordnet.

Bei einer solchen Ausgestaltung wird das zu befördernde Stückgut zum Transport und zur Sortierung auf dem Transportband abgelegt. Wenn ein Stückgut abgeworfen werden soll, wird das Transportband an einer vorgesehenen Abgabestation in gegenläufiger Richtung bewegt, sodass die effektive Geschwindigkeit des transportierten Stückguts in Förderrichtung reduziert wird.

Vorzugsweise kann dadurch die effektive Geschwindigkeit des transportierten Stückguts in Förderrichtung auf Null gesenkt werden. Das wird erreicht, wenn die gegenläufige Geschwindigkeit des Transportbandes bei Abgabe des Stückguts gleich der Geschwindigkeit des Fördergurtes in Förderrichtung ist. Dadurch wird eine besonders schonende Abgabe der Stückgüter erreicht. Außerdem können so abgeworfene Stückgüter gestapelt werden, da die Geschwindigkeit in Förderrichtung Null ist und somit ein folgendes Stückgut präzise auf einem vorhergehenden Stückgut abgelegt wird. Auch eine präzise Abgabe nebeneinander ist durch eine geeignete Steuerung möglich.

Ein weiterer Vorteil einer solchen Ausgestaltung ist auch, dass eine Nutzung des Sortiersystems im Untertrum möglich ist, denn das seitlich angeordnete Transportband weist im Untertrum und im Obertrum des Fördergurtes ein nutzbares Transportband auf. Dabei muss allerdings der Sortiervorgang jeweils im Obertrum bzw. im Untertrum des Fördergurtes abgeschlossen werden.

In allen Ausgestaltungen ist insbesondere an wenigstens einem Ende eine Antriebstrommel vorgesehen, die die Antriebskraft auf den Fördergurt überträgt. Zur besseren Kraftübertragung können in Querrichtung Rippen an dem Fördergurt vorgesehen sein oder der als Zugträger ausgebildete Fördergurt ist als Zahnriemen ausgebildet, dessen Zähne in entsprechende Nuten der Antriebstrommel eingreifen.

An dem anderen Ende ist vorzugsweise eine Umlenktrommel vorgesehen. Möglich ist es auch, dass an beiden Enden synchron betriebene Antriebstrommeln vorgesehen sind. Die Aufbringung der Antriebskraft über eine Antriebstrommel ist vorteilhaft, da der Wirkungsgrad solcher Antriebe sehr hoch ist. Im Stand der Technik werden oftmals Linearantriebe eingesetzt, bei denen die Sortiereinheiten praktisch einen Teil des Antriebssystems bilden. Die benötigte elektrische Leistung wird über den Spalt zwischen dem Schienensystem und den Sortiereinheiten übertragen. Diese Übertragung der Antriebsenergie funktioniert gut, allerdings mit einem reduzierten Wirkungsgrad, sodass die vorliegende Erfindung einen erheblichen Anteil der Antriebsenergie einspart.

In allen Ausgestaltungen ist die Förderrichtung insbesondere umkehrbar.

Vorteilhafterweise ist es möglich, dass entlang der Wegbahn im Obertrum wenigstens eine Höhendifferenz vorgesehen ist, sodass auf der Wegbahn im Obertrum eine Steigung oder mehrere nacheinander folgende Steigungen vorgesehen sind, sodass gegebenenfalls eine Aufnahme und/oder Abgabe zu transportierender Güter auf unterschiedlichen Höhenniveaus möglich ist.

Vorzugsweise ist der Vertikalsorter in einer etwa graden Linie ausgerichtet, wobei in der Wegbahn auch leichte Horizontalkurven vorgesehen sein können, in denen es möglich ist, dass die einzelnen Sortiereinheiten die Fördergurtaufnahmen entsprechend neigen, um ein unbeabsichtigtes Abwerfen der zu transportierenden Stückgüter durch die Fliehkraft bedingt zu verhindern.

Jede Sortiereinheit weist vorzugsweise eine Fahreinrichtung auf, die insbesondere als Fahrwagen ausgebildet ist. Jede Fahreinrichtung weist insbesondere Laufräder auf, die wenigstens auf den horizontalen Abschnitten in Laufschienen geführt werden. Vorzugsweise sind horizontale und vertikale Laufräder vorgesehen, um eine vertikale bzw. horizontale Abstützung der einzelnen Sortiereinrichtungen an den Laufschienen zu ermöglichen. Die Laufschienen dienen einerseits zur Übertragung der Gewichtskraft bei langgestreckten Sortiersystemen und andererseits zur Reduktion von Schwingungen, die sich in vertikaler Richtung bei der Aufnahme und Abgabe der zu transportierenden Stückgüter ergeben können.

Die Gurtenden des Zugträgers sind insbesondere an einer Gurtverbindung miteinander zugfest aber vorzugsweise lösbar miteinander verbunden, um bei z.B. Wartungsarbeiten den Gurt lösen zu können. Zwischen die beiden Gurtenden wird ein inneres Formstück und außen werden vorzugsweise zwei äußere gegenüber angeordnete Formstücke angeordnet, die an der Gurtverbindung die Gurtenden definiert nach außen umlenken. Insbesondere sind dort über der Breite des Zugträgers verteilt mehrere Schraubverbindungen vorgesehen, um eine zugfeste Verbindung des Zugträgers zu gewährleisten.

Besonders bevorzugt sind die an einem Gurtende austretenden Verstärkungsmittel und insbesondere die Verstärkungsseile dort an einer Seilverbindung miteinander verbunden. Dadurch wird eine Auszugssicherung der einzelnen Verstärkungsseile erreicht, womit eine verbesserte Belastbarkeit und höhere Betriebssicherheit erzielt wird. Besonders bevorzugt sind beide Gurtenden ähnlich oder identisch aufgebaut.

Insbesondere sind die an dem Gurtende austretenden Verstärkungsseile miteinander verzwirbelt. Es können auch die einzelnen Adern der Verstärkungsseile miteinander verzwirbelt sein.

Besonders bevorzugt sind die Verstärkungsseile jedes Gurtendes an jeweils einem Verbindungskasten mit einem Bindemittel wie z.B. Kunstharz oder einem Klebstoff oder einem insbesondere niedrig schmelzenden Metall vergossen.

Durch die für jedes Gurtende getrennte Verbindung der Seilenden ergibt sich insgesamt eine wieder lösbare Verbindung des Zugträgers, wodurch der Gurt beispielsweise zu Wartungszwecken oder dergleichen wieder geöffnet und anschließend problemlos wieder verschlossen werden kann.

An der Seilverbindung ist vorteilhafterweise eine Einstellung der Gurtlänge möglich, um z.B. den Abstand zweier Fördereinheiten auf dem Gurt definiert einzustellen. Zur definierten Einstellung der Gurtlänge sind an der Seilverbindung jeweils austauschbare Abstandshalter einlegbar vorgesehen. Durch die Wahl einer geeigneten Dicke kann die gewünschte Gurtlänge gezielt eingestellt und an die Begebenheiten angepasst werden.

Weitere Vorteile und Merkmale ergeben sich aus den Ausführungsbeispielen, die nun mit Bezug auf die beiliegenden Figuren erläutert werden.

In den Figuren zeigen:
- Fig. 1: eine schematische Seitenansicht eines erfindungsgemäßen Sortiersystem;
- Fig. 2: eine vergrößerte Darstellung eines Teils des Sortiersystems nach Fig. 1;
- Fig. 3: eine perspektivische Ansicht einer Sortiereinheit des Sortiersystems nach Fig. 1;
- Fig. 4: eine Seitenansicht einer Sortiereinheit des Sortiersystems nach Fig. 1;
- Fig. 5: eine schematisierte Ansicht eines Fördergurts für ein Sortiersystem nach Fig. 1;

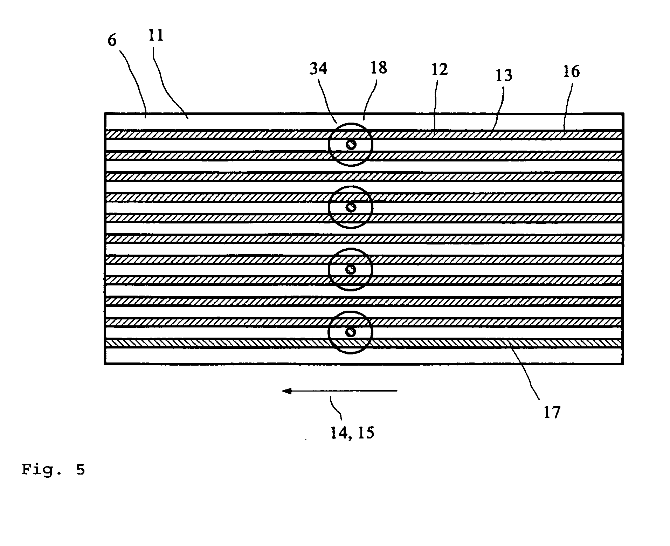

- Fig. 5: eine schematisierte Ansicht der Anbindung der Sortiereinheiten an den Fördergurt;

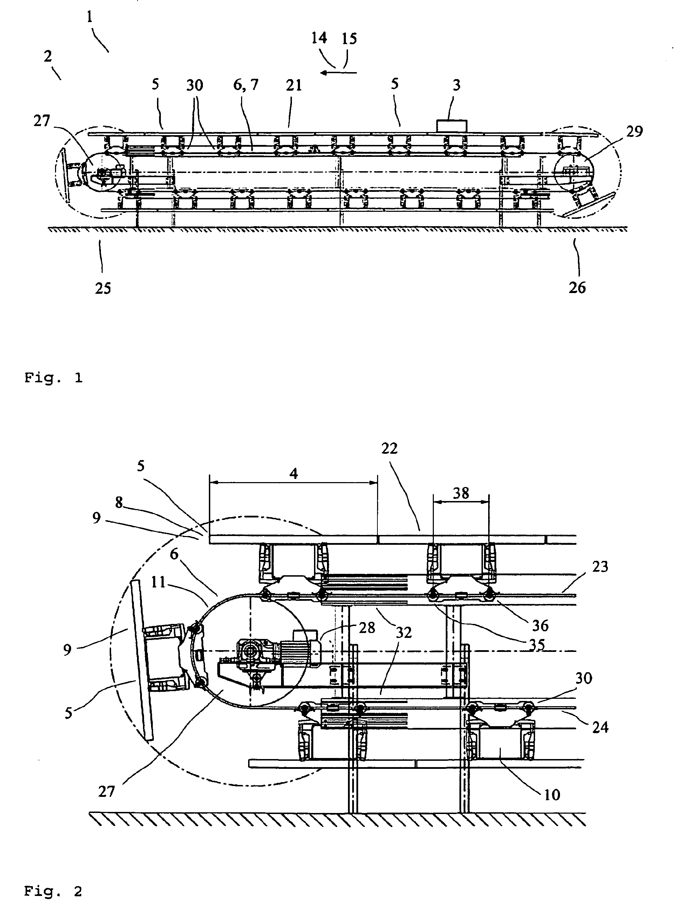

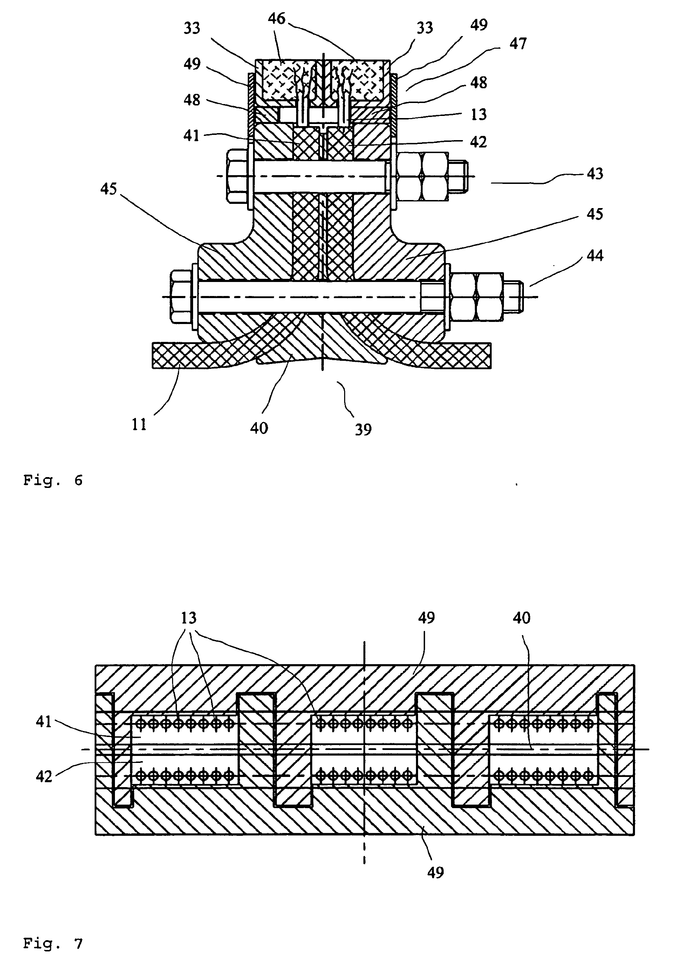

- Fig. 6: eine Ansicht der Verbindungsstelle der Enden des Fördergurts des Sortiersystems nach Fig. 1; und
- Fig. 7: einen Querschnitt im Bereich der Seilverbindung nach Fig. 6.

Mit Bezug auf die Figuren 1 - 7 wird im Folgenden ein Ausführungsbeispiel der vorliegenden Erfindung näher erläutert.

In Fig. 1 und 2 ist eine schematische Seitenansicht eines erfindungsgemäßen Sortiersystems 1 dargestellt, dass einen Vertikalsorter 2 umfasst, der zur Förderung und Sortierung von Stückgütern 3 vorgesehen ist. Dazu umfasst der Vertikalsorter 2 eine Mehrzahl von Sortiereinheiten 5, die über einen geschlossenen Fördergurt 6 entlang einer Wegbahn 7 miteinander verbunden und entlang der Wegbahn 7 bewegbar sind.

Jede Sortiereinheit 5 umfasst hier im Ausführungsbeispiel einen Fahrwagen 30, der hier an dem als Zugträger 11 ausgebildeten Fördergurt 6 befestigt ist und eine darauf montierte Stückgutaufnahme 8, die hier im Ausführungsbeispiel als Kippschale 9 ausgeführt ist.

Die Länge der einzelnen Sortiereinheiten 5 wird hier im Wesentlichen durch die Länge der Kippschalen 9 bestimmt und entspricht hier im Wesentlichen dem Abstand 4 zweier Sortiereinheiten, sodass sich auf der Oberseite des Obertrums 23 eine im Wesentlichen geschlossene Förderfläche 22 ergibt.

Das hat unter anderem den Vorteil, dass zwei oder mehr Fördereinheiten 5 zur gemeinsamen Förderung und Sortierung eines Stückgutes 3 eingesetzt werden können, welches länger ist als der Abstand 4 bzw. die Länge einer Sortiereinheit 5. Soll beispielsweise ein Stückgut 3 gefördert werden, dessen Länge der anderthalbfachen Länge 4 zweier Sortiereinheiten entspricht, so wird das Stückgut 3 auf zwei Sortiereinheiten 5 abgelegt und von den beiden Sortiereinheiten 5 transportiert, bis ein Signal zur Abgabe des Stückgutes 3 ausgegeben wird, wo beide Sortiereinheiten 5 das Stückgut 3 synchron oder zeitlich versetzt ablegen.

Generell wird nach einem Abgabesignal der Motor 10 einer Sortiereinheit 5 aktiviert und die Kippschale 9 von der Transportstellung 21 in eine Abgabestellung bzw. Abwurfstellung gekippt, in der das auf der Kippschale 9 aufliegende Stückgut 3 durch die Schwerkraft bedingt von der Kippschale 9 herunterrutscht und zielgenau abgegeben wird.

Auf diese Art und Weise können Stückgüter 3 zwischen den Enden 25 und 26 des Vertikalsorters 2 gezielt den einzelnen dazwischen angeordneten Abgabestationen übergeben werden. Weiterhin können die Kippschalen 9 sowohl zu der einen Seite 19 als auch der anderen Seite 20 seitlich abgegeben werden.

Die einzelnen Sortiereinheiten 5 sind über den als Zugträger 11 ausgebildeten Fördergurt 6 miteinander entlang des Umfangs der Wegbahn 7 verbunden und werden von dem Zugträger 11 getragen.

An dem Ende 25 des Vertikalsorters 2 ist eine Antriebstrommel 27 vorgesehen, die über einen Elektromotor 28 angetrieben wird. Der mit einer erheblichen Vorspannkraft vorgespannte Zugträger 11 wird durch die Drehung der Antriebstrommel 27 in die Transportrichtung 15 transportiert. Bei Bedarf ist auch eine Umkehrung der Transportrichtung 15 möglich.

An dem anderen Ende 26 des Vertikalsorters 2 ist hier im Ausführungsbeispiel eine Umlenktrommel 29 vorgesehen, die den Gurt zurück in Richtung auf das erste Ende 25 umlenkt. In anderen Ausgestaltungen ist es auch möglich, an dem zweiten Ende 26 einen zusätzlichen Motor 28 vorzusehen, der synchron mit dem Motor 28 am ersten Ende 25 gesteuert wird, um das Antriebsdrehmoment an beiden Enden 25 und 26 des Vertikalsorters 2 aufzubringen.

Der Fahrwagen 30 einer Sortiereinheit 5 ist an wenigstens einer Verbindungsstelle 18 mit dem Fördergurt 6 verbunden. Der Fahrwagen 30 ist mit Laufrädern 31 an beiden Enden und auf beiden Seiten ausgerüstet, die auf den Längsseiten 19 und 20 in dafür vorgesehenen Laufschienen 32 laufen, um auf den horizontalen Wegstücken zwischen den beiden Enden 25 und 26 die einzelnen Sortiereinheiten 5 zu führen. Dadurch wird einerseits das auf den Sortiereinheiten lastende Gewicht über die Laufschiene 32 abgeführt und andererseits werden Vertikalschwingungen reduziert, die durch die Aufgabe und durch die Abgabe von Stückgütern 3 entstehen können.

In anderen Ausgestaltungen ist es möglich, zwei Umlenkstationen im Untertrum 24 vorzusehen, an denen der Fördergurt 6 jeweils um 180 Grad gedreht wird, sodass auch im Bereich des Untertrums die Kippschalen 9 Stückgüter 3 aufnehmen können, um nicht nur im Bereich des Obertrums 23, sondern auch im Bereich des Untertrums 24 jeweils eine Sortierung vorzunehmen.

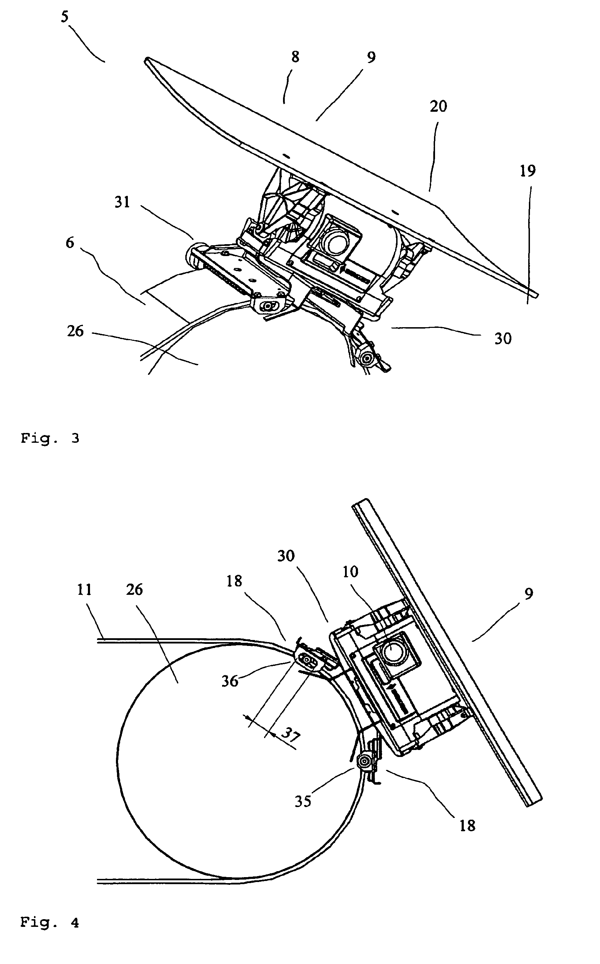

In Fig. 3 ist eine perspektivische Ansicht einer Sortiereinheit 5 des Sortiersystems und in Fig. 4 eine Seitenansicht der Sortiereinheit 5 des Sortiersystems 1 nach Fig. 1 abgebildet.

Die Sortiereinheiten 5 umfassen einen Fahrwagen 30, auf dem die Kippschalen 9 angeordnet sind. Die Kippschalen 9 können über den Motor 10 elektrisch angetrieben ein aufgenommenes Stückgut wahlweise zu der einen Seite 19 oder zu der anderen Seite 20 abgeben.

Die einzelnen Fahrwagen 30 sind an zwei in Längsrichtung um den Abstand 38 voneinander beabstandeten Verbindungsstellen 18 mit dem Zugträger 11 verbunden.

An der ersten Verbindungsstelle 35 ist der Fahrwagen 30 drehbeweglich und örtlich fest mit dem Zugträger verbunden. Das bedeutet, dass dort insbesondere keinerlei Längsverschiebung möglich ist.

An der zweiten Verbindungsstelle 36 ist der Fahrwagen 30 ebenfalls drehbeweglich mit dem Zugträger 11 verbunden. An dieser Verbindungsstelle 36 ist die drehbewegliche Aufnahme um eine verschiebbare Länge 37 entlang des Zugträgers verschiebbar aufgenommen. Durch die Längenverschiebbarkeit kann an den vertikalen Umlenkungspunkten an den Enden 25 und 26 ein Polygoneffekt vermieden werden, da einen Längenausgleich statt findet. Denn obwohl die Tangente zwischen den Verbindungsstellen 35 und 36 eine von dem Umfangssegment unterschiedliche Länge aufweist, kann der Fahrwagen 30 ständig auf der Oberfläche anliegen. Die sich ergebende Längendifferenz wird durch die verschiebbare Länge 37 ausgeglichen. Eine durch einen Polygoneffekt hervorgerufene erhöhte mechanische Belastung des Zugträgers wird vermieden. Auch die akustische Belastung wird dadurch reduziert.

Auch die auf die Fahrwagen 30 und die Stückgutaufnahmen 8 wirkenden Beschleunigungen beim Auflaufen und beim Ablaufen auf die Umlenktrommeln können im Gegensatz zu einer festen Anbindung deutlich reduziert werden.

Bei dem Vertikalsorter 2 wird regelmäßig angestrebt, dass die Abstände zwischen den einzelnen Kippschalen 9 so gering wie möglich sind, damit sich eine im Wesentlichen geschlossene Förderfläche 22 ergibt. Dadurch wird beispielsweise vermieden, dass sich Stückgutteile durch einen größeren Freiraum zwischen Kippschalen 9 hindurch nach unten erstrecken und sich dort gegebenenfalls einklemmen können.

Um die nötige Stabilität und Tragkraft des Fördergurts 6 zu gewährleisten, ist der Fördergurt 6 als Zugträger 11 ausgebildet und mit Verstärkungsmitteln 12 verstärkt wie der Darstellung nach Fig. 5 entnommen werden kann. Die Verstärkungsmittel 12 sind hier als Verstärkungsseile 13 ausgeführt und bestehen insbesondere aus Stahlseilen 16, die benachbart oder insbesondere parallel zueinander in dem als Zugträger 11 ausgebildeten Fördergurt 6 eingebettet sind. Möglich ist es aber auch, Verstärkungsmittel 12 aus Verstärkungsfasern 17 in den Zugträger 11 einzuarbeiten, die zu einer entsprechenden Verstärkung in der Längsrichtung 14 entlang der Transportrichtung 15 führen.

Vorzugsweise werden eine Vielzahl von Verstärkungsseilen 13 mit kleinem Abstand zueinander benachbart in dem Zugträger 11 vorgesehen, sodass eine hohe Stabilität in Längsrichtung erzielt wird, während gleichzeitig zwischen den einzelnen Stahlseilen 16 noch Platz verbleibt, um Schraubverbindungen 34 an Verbindungsstellen 18 vorzusehen, mit denen die Fahrwagen 30 der Sortiereinheiten 5 an den Zugträger 11 befestigt werden. In besonderer Weise bevorzugt werden mit Seilen verstärkte Zugträger eingesetzt, die seilfreie Zonen aufweisen, um die Verschraubung zu erleichtern.

Vorzugsweise werden die beiden Enden des Fördergurts (nicht dargestellt) ebenfalls über Schraubverbindungen 34 miteinander verbunden, so wie es in Fig. 6 dargestellt ist.

Wie in Fig. 6 dargestellt, sind die Gurtenden 41 und 42 des als Zugträger ausgebildeten Fördergurts 6 an einer Gurtverbindung 39 miteinander zugfest verbunden. Ein insbesondere als Schwertprofil ausgeführtes unteres Formstück 40 und zwei gegenüber angeordnete Formstücke 45 lenken die Gurtenden 41 und 42 definiert um etwa 90° nach außen um. Über der Breite des Zugträgers sind mehrere Schraubverbindungen 43 und mehrere Schraubverbindungen 44 vorgesehen, um mittels zweier hintereinander geschalteter Schraubverbindungen 43 und 44 eine zugfeste Verbindung des Zugträgers 11 zu gewährleisten, die auch hohen und höchsten Belastungen Stand hält. Die einzelnen Schraubverbindungen können jeweils mit einer Kontermutter oder dergleichen gesichert sein.

Wie den Figuren 6 und 7 entnommen werden kann, sind an jedem Gurtende 41 und 42 die jeweils aus einem Gurtende austretenden Verstärkungsseile miteinander an einer Seilverbindung 47 verbunden. Dazu sind einzelne Adern benachbarter oder aller Verstärkungsseile 13 eines Gurtendes 41 oder 42 dort miteinander verzwirbelt.

Außerdem sind die Enden der Verstärkungsseile 13 von jeweils einer Verbindungsaufnahme in Form eines Verbindungskastens 33 aufgenommen und dort mit einem Bindemittel 46 vergossen. Das Bindemittel 46 kann ein Harz oder Kunstharz oder ein sonstiger Zwei- oder Mehrkomponentenkleber sein. Möglich ist auch das Vergießen mit einer Metalllegierung. Wichtig ist hier, dass an jedem Gurtende 41, 42 die Verstärkungsseile separat miteinander verbunden sind, sodass die Enden des Zugträgers 11 an der Gurtverbindung 39 fest aber wieder lösbar miteinander verbunden sind.

Es sind Abstandshalter 48 in Form von z.B. Futterblechen vorgesehen, die austauschbar an der Seilverbindung 47 angeordnet werden. Durch Wahl eines anderen Abstandshalters 48 mit einer entsprechend gewünschten Dicke kann die Länge des Zugträgers 11 eingestellt werden, um z.B. den Abstand der Sortiereinheiten 5 an der Gurtverbindung 39 definiert einzustellen.

Insgesamt wird durch die Erfindung ein Sortiersystem zur Verfügung gestellt, bei dem auch bei hohen und höchsten Vorspannungen nur eine geringe Dehnung des Zugträgers des Fördergurts 6 auftritt, da durch die Verstärkungsmittel 12. bedingt die Dehnung des Zugträgers 11 in Längsrichtung 14 gering ist und sich mit zunehmender Betriebsdauer nicht ändert.

Das hat auch den erheblichen Vorteil, dass die lokale Dehnung des Fördergurts 6 über der Wegbahn 7 nahezu gleichbleibend und unabhängig von der Belastung ist. Bei Fördergurten ohne Verstärkungsmittel ändert sich die lokale Dehnung in Abhängigkeit von dem aktuellen Belastungszustand, sodass sich die Positionen des Anfangs und des Endes einer Sortiereinheit bei Einsatz von Fördergurten ohne Verstärkungsmitteln erheblich verschieben können. Das erschwert die Aufgabe und die Abgabe der zu sortierenden Stückgüter, da die Position der Kippschalen der Sortiereinheiten nicht genau definiert ist. Hier bietet die vorliegende Erfindung den erheblichen Vorteil, dass solche Unsicherheiten stark reduziert werden. Außerdem ist das erfindungsgemäße Sortiersystem für höchste Transport- und Sortiergeschwindigkeiten und für hohe und höchste Stückgutgewichte ausgelegt.

### Bezugzeichen:

- 1: Sortiersystem
- 2: Vertikalsorter
- 3: Stückgut
- 4: Abstand
- 5: Sortiereinheit
- 6: Fördergurt
- 7: Wegbahn
- 8: Stückgutaufnahme
- 9: Kippschale
- 10: Motor
- 11: Zugträger
- 12: Verstärkungsmittel
- 13: Verstärkungsseil
- 14: Längsrichtung
- 15: Transportrichtung
- 16: Stahlseil
- 17: Verstärkungsfaser
- 18: Verbindungsstelle
- 19: Seite
- 20: Seite
- 21: Transportstellung
- 22: Förderfläche
- 23: Obertrum
- 24: Untertrum
- 25: Ende
- 26: Ende
- 27: Antriebstrommel
- 28: Motor
- 29: Umlenktrommel
- 30: Fahrwagen
- 31: Laufrad
- 32: Laufschiene
- 33: Verbindungskasten
- 34: Schrauben
- 35: erste Verbindungsstelle
- 36: zweite Verbindungsstelle
- 37: verschiebbare Länge
- 38: Abstand
- 39: Gurtverbindung
- 40: Formstück
- 41: Gurtende
- 42: Gurtende
- 43: Schraubverbindung
- 44: Schraubverbindung
- 45: Formstück
- 46: Bindemittel
- 47: Seilverbindung
- 48: Abstandshalter
- 49: Halteblech

## Patentansprüche

1. Sortiersystem (1) mit einem Vertikalsorter (2) insbesondere zur Förderung und Sortierung von Stückgütern (3), umfassend eine Mehrzahl von in vorbestimmten Abständen (4) zueinander vorgesehenen Sortiereinheiten (5), die sich über einen geschlossenen Fördergurt (6) entlang einer Wegbahn (7) erstrecken und mit dem Fördergurt (6) verbunden und entlang der Wegbahn (7) bewegbar sind, wobei wenigstens zwei Umlenktrommeln (27, 29) mit horizontalen Drehachsen vorgesehen sind, von denen wenigstens eine Umlenktrommel als Antriebstrommel (27) dient, um den im Wesentlichen horizontal angeordneten Fördergurt (6) und die daran vorgesehenen Sortiereinheiten (5) um die horizontal ausgerichteten Drehachsen umzulenken und anzutreiben,
**dadurch gekennzeichnet,**
**dass** der Fördergurt (6) als Zugträger (11) ausgebildet ist, wozu der Fördergurt (6) mit Verstärkungsmitteln (12) verstärkt ist, um die Sortiereinheiten (5) anzutreiben, und dass wenigstens eine Sortiereinheit (5) wenigstens eine Fahreinrichtung (30) mit Laufrädern (31) aufweist und an zwei in Längsrichtung beabstandeten Verbindungsstellen (35, 36) mit dem Zugträger (11) verbunden ist, wobei die Sortiereinheiten (5) an ersten Verbindungsstellen (35) ortsfest aber drehbeweglich und an zweiten Verbindungsstellen (36) längsverschieblich an den Zugträger (11) gekoppelt sind, wobei die Sortiereinheit (5) wenigstens eine Stückgutaufnahme (8) aufweist, von der ein aufgenommenes Stückgut (3) gesteuert abwerfbar ist.

2. Sortiersystem (1) nach Anspruch 1, wobei der Fördergurt (6) aus einem elastischem und mit den Verstärkungsmitteln (12) versehenen Material besteht, um eine hohe Festigkeit und Vorspannung bei geringer Dehnung zu ermöglichen, und wobei die Verstärkungsmittel (12) insbesondere wenigstens ein Verstärkungsseil (13) und vorzugsweise eine Vielzahl benachbarter Verstärkungsseile (13) umfassen, welche in Längsrichtung (14) angeordnet sind.

3. Sortiersystem (1) nach einem der vorhergehenden Ansprüche, wobei die Sortiereinheit (5) mit einem Motor (10) versehen ist, um ein von der Stückgutaufnahme (8) aufgenommenes Stückgut (3) motorgesteuert abzuwerfen.

4. Sortiersystem (1) nach einem der vorhergehenden Ansprüche, wobei die Sortiereinheiten (5) an wenigstens einer Stelle (18) fest mit dem Fördergurt (6) verbunden und insbesondere damit über eine Mehrzahl an Schrauben (34) verschraubt sind.

5. Sortiersystem (1) nach wenigstens einem der vorhergehenden Ansprüche, wobei die Sortiereinheiten (5) an den zweiten Verbindungsstellen (35) jeweils auch drehbeweglich an den Zugträger (11) gekoppelt sind.

6. Sortiersystem (1) nach einem der vorhergehenden Ansprüche, wobei wenigstens eine Stückgutaufnahme (8) als Kippschale (9) ausgebildet ist, welche mittels des Motors (10) von einer Transportstellung (21) in eine zu wenigstens einer Seite (19, 20) geneigte Abwurfstellung (33) bringbar ist.

7. Sortiersystem (1) nach einem der vorhergehenden Ansprüche, wobei wenigstens eine Stückgutaufnahme (8) einen Quergurtförderer umfasst, welcher mittels eines Motors (10) ein aufgenommenes Stückgut gesteuert abgibt.

8. Sortiersystem (1) nach einem der vorhergehenden Ansprüche, wobei die Stückgutaufnahmen (8) der Sortiereinheiten (5) im Obertrum eine im Wesentlichen geschlossene Förderfläche (22) bilden.

9. Sortiersystem (1) nach einem der vorhergehenden Ansprüche, wobei entlang der Wegbahn (7) im Obertrum wenigstens eine Höhendifferenz vorgesehen ist.

10. Sortiersystem (1) nach einem der vorhergehenden Ansprüche, wobei die Laufräder (31) wenigstens auf den Längsabschnitten in Laufschienen (32) geführt werden.

11. Sortiersystem (1) nach einem der beiden vorhergehenden Ansprüche, wobei horizontale und vertikale Laufräder (31) vorgesehen sind, um eine vertikale und horizontale Abstützung zu ermöglichen.

12. Sortiersystem (1) nach einem der vorhergehenden Ansprüche, wobei eine berührungslose Energieübertragung zu der Sortiereinheit (5) vorgesehen ist, um den Motor (10) der Stückgutaufnahme (8) mit Energie zu versorgen.

13. Sortiersystem (1) nach einem der vorhergehenden Ansprüche, wobei eine mechanische Auslösung der Sortiereinheiten (5) vorgesehen ist, welche über mechanische Auslöseeinheiten an dem Gerüst gesteuert werden.

14. Sortiersystem (1) nach einem der vorhergehenden Ansprüche, wobei die Verstärkungsseile (13) an einem Gurtende austreten und dort an einer Seilverbindung miteinander verbunden sind, wobei insbesondere die an dem Gurtende austretenden Verstärkungsseile (13) miteinander verzwirbelt sind.

15. Sortiersystem (1) nach einem der vorhergehenden Ansprüche, wobei die Verstärkungsseile (13) an einem Verbindungskasten mit einem Bindemittel vergossen sind,
wobei insbesondere die Verstärkungsseile (13) der beiden Gurtenden jeweils separat mit einem Bindemittel vergossen sind.

16. Sortiersystem (1) nach einem der vorhergehenden Ansprüche, wobei zur definierten Einstellung der Gurtlänge an der Seilverbindung austauschbare Abstandshalter einlegbar sind.

17. Sortiersystem (1) nach einem der vorhergehenden Ansprüche, wobei an wenigstens einer Sortiereinheit wenigstens ein gegenläufig zur Förderrichtung laufendes Transportband vorgesehen ist, welches insbesondere seitlich neben dem Fördergurt angeordnet ist.

## Claims

1. A sorting system (1) having a vertical sorter (2) in particular for conveying and sorting parcel goods (3), comprising a plurality of sorting units (5) provided at predetermined distances (4) from one another extending along a traveling path (7) over a closed conveyor belt (6) and being connected with the conveyor belt (6) and movable along the traveling path (7), wherein at least two reversing drums (27, 29) having horizontal rotational axes are provided at least one of which serves as a drive drum (27) for reversing and driving about the horizontally oriented rotational axes the conveyor belt (6) which is substantially disposed horizontally, and the sorting units (5) provided thereon,
**characterized in**
**that** the conveyor belt (6) is configured as a traction carrier (11) to which end the conveyor belt (6) is reinforced with reinforcing means (12) for driving the sorting units (5), and that at least one sorting unit (5) comprises at least one moving device (30) having wheels (31) and is connected with the traction carrier (11) in two connection points (35, 36) spaced apart in the longitudinal direction, wherein the sorting units (5) are coupled to the traction carrier (11) in first connection points (35) to be stationary but free to rotate and in second connection points (36) to be longitudinally displaceable, the sorting unit (5) comprising at least one parcel goods receiver (8) which allows controlled discharge of a received parcel (3).

2. The sorting system (1) according to claim 1 wherein the conveyor belt (6) consists of an elastic material provided with the reinforcing means (12) to allow high strength and prestress with little elongation, and wherein the reinforcing means (12) comprise in particular at least one reinforcing cable (13) and preferably a plurality of adjacent reinforcing cables (13) disposed in the longitudinal direction (14).

3. The sorting system (1) according to any of the preceding claims wherein the sorting unit (5) is provided with a motor (10) for discharging by way of motor control a parcel (3) received by the parcel goods receiver (8).

4. The sorting system (1) according to any of the preceding claims wherein the sorting units (5) are firmly connected with the conveyor belt (6) at least in one position (18) and in particular screw-connected via a plurality of screws (34).

5. The sorting system (1) according to at least one of the preceding claims wherein the sorting units (5) are coupled to the traction carrier (11) in second connection points (35) to be also free to rotate.

6. The sorting system (1) according to any of the preceding claims wherein at least one parcel goods receiver (8) is configured as a tilt tray (9) which by means of the motor (10) can be brought from a transport position (21) to a discharge position (33) inclined at least towards one of the sides (19, 20).

7. The sorting system (1) according to any of the preceding claims wherein at least one parcel goods receiver (8) comprises a cross conveyor for controlled discharge of a received parcel by means of a motor (10).

8. The sorting system (1) according to any of the preceding claims wherein the parcel goods receivers (8) of the sorting units (5) form a substantially closed conveying surface (22) in the upper flight.

9. The sorting system (1) according to any of the preceding claims wherein at least one height difference is provided along the traveling path (7) in the upperflight.

10. The sorting system (1) according to any of the preceding claims wherein the wheels (31) are guided in guide rails (32) at least in the longitudinal sections.

11. The sorting system (1) according to any of the two preceding claims wherein horizontal and vertical wheels (31) are provided to allow vertical and horizontal support.

12. The sorting system (1) according to any of the preceding claims wherein non-contact power transmission to the sorting unit (5) is provided for supplying the motor (10) of the parcel goods receiver (8) with power.

13. The sorting system (1) according to any of the preceding claims wherein mechanical triggering of the sorting units (5) is provided, which is controlled by means of mechanical trigger units at the frame.

14. The sorting system (1) according to any of the preceding claims wherein the reinforcing cables (13) emerge from one belt end where they are interconnected at a cable connection wherein in particular the reinforcing cables (13) emerging at the belt end are twisted with one another

15. The sorting system (1) according to any of the preceding claims wherein the reinforcing cables (13) are potted with a binding agent at a connection box wherein in particular each of the reinforcing cables (13) of the two belt ends is separately potted with a binding agent.

16. The sorting system (1) according to any of the preceding claims wherein exchangeable spacers can be inserted to allow defined adjustment of the belt length at the cable connection.

17. The sorting system (1) according to any of the preceding claims wherein at least one sorting unit is provided with at least one conveyor belt running opposite the conveying direction and which is in particular disposed on the side next to the conveyor belt.

## Revendications

1. Système de tri (1) comprenant une trieuse verticale (2) en particulier pour déplacer et trier des produits de détail (3), comprenant plusieurs unités de tri (5) disposées à intervalles prédéfinis (4), qui sont déployées le long d'une voie de déplacement (7) par le biais d'un convoyeur à bande fermée (6), sont reliées au convoyeur à bande (6) et déplaçables le long de la voie de déplacement (7), au moins deux tambours de renvoi (27, 29) à axes de rotation horizontaux étant prévus, dont au moins un tambour de renvoi sert de tambour d'entraînement (27) pour renvoyer et entraîner le convoyeur à bande (6) agencé pour l'essentiel à l'horizontal ainsi que les unités de tris (5) qui y sont prévues, autour des axes de rotation horizontaux, **caractérisé en ce que**,
le convoyeur à bande (6) est conçu en tant que poutre de traction (11), le convoyeur à bande (6) étant renforcé à cette fm par des agents de renfort (12) pour entraîner les unités de tri (5), et qu'au moins une unité de tri (5) présente au moins un dispositif transporter (30) à roues de roulement (31) et est reliée à la poutre de traction (11) en deux points de connexion (35, 36) d'écartement longitudinal, les unités de tri (5) étant raccordées à la poutre de traction (11) en position fixe mais rotative au niveau des premiers points de connexion (35) et déplaçable sur l'axe longitudinal au niveau des deuxièmes points de connexion (36), l'unité de tri (5) présentant au moins un dispositif de réception de produit de détail (8), dont un produit de détail réceptionné (3) peut être éjecté par commande.

2. Système de tri (1) selon la revendication 1, le convoyeur à bande (6) étant constitué d'un matériau élastique et pourvu d'agents de renfort (12) afin de permettre une grande résistance et une tension de polarisation élevée pour un faible allongement, les agents de renfort (12) en particulier comprenant au moins un câble de renfort (13) et de préférence plusieurs câbles de renfort (13) voisins et agencés sur l'axe longitudinal (14).

3. Système de tri (1) selon l'une quelconque des revendications précédentes, l'unité de tri (5) étant pourvue d'un moteur (10) pour éjecter par commande motorisée un produit de détail (3) réceptionné par le dispositif de réception de produit de détail (8).

4. Système de tri (1) selon l'une quelconque des revendications précédentes, les unités de tri (5) étant connectées fixe avec le convoyeur à bande (6) à au moins un point (18), et en particulier vissées à celui-ci au moyen de plusieurs vis (34).

5. Système de tri (1) selon au moins l'une quelconque des revendications précédentes, les unités de tri (5) étant chacune raccordées également de manière rotative à la poutre de traction (11) en ses deuxièmes points de connexion (35).

6. Système de tri (1) selon l'une quelconque des revendications précédentes, au moins un dispositif de réception de produit de détail (8) étant conçu sous forme de plateau basculant (9) qu'un moteur (10) permet de faire passer d'une position de transport (21) en une position d'éjection (33) penchée au moins d'un côté (19, 20).

7. Système de tri (1) selon l'une quelconque des revendications précédentes, au moins un dispositif de réception de produit de détail (8) comprenant un convoyeur à tapis transversal, lequel éjecte par commande au moyen d'un moteur (10) un produit de détail réceptionné.

8. Système de tri (1) selon l'une quelconque des revendications précédentes, les dispositifs de réception de produits de détail (8) des unités de tri (5) formant dans le brin supérieur une surface de transport pour l'essentiel fermée (22).

9. Système de tri (1) selon l'une quelconque des revendications précédentes, au moins une différence de hauteur étant prévue le long de la voie de déplacement (7) dans le brin supérieur.

10. Système de tri (1) selon l'une quelconque des revendications précédentes, les roues de roulement (31) étant dirigées par le biais de rails de roulement (32) au moins au niveau des sections longitudinales.

11. Système de tri (1) selon l'une quelconque des deux revendications précédentes, des roues de roulement horizontales et verticales étant prévues pour permettre un appui vertical et horizontal.

12. Système de tri (1) selon l'une quelconque des revendications précédentes, une transmission d'énergie sans contact étant prévue vers l'unité de tri (5) pour approvisionner le moteur (10) du dispositif de réception de produit de détail (8) en énergie.

13. Système de tri (1) selon l'une quelconque des revendications précédentes, un déclenchement mécanique des unités de tri (5) étant prévu, ces dernières étant commandées par le biais d'unités de déclenchement mécanique au niveau de l'ossature.

14. Système de tri (1) selon l'une quelconque des revendications précédentes, les câbles de renfort (13) sortant à une extrémité de bande et y étant reliés les uns aux autres par le biais d'une connexion de câbles, les câbles de renfort (13) ressortant en particulier à l'extrémité de la bande convoyeuse étant entortillés entre eux.

15. Système de tri (1) selon l'une quelconque des revendications précédentes, les câbles de renfort (13) étant scellés au niveau d'une boîte de jonction au moyen d'un agent liant, en particulier les câbles de renfort (13) des deux extrémités de bande étant chacun scellé séparément au moyen d'un agent liant.

16. Système de tri (1) selon l'une quelconque des revendications précédentes, des barrettes de maintien interchangeables pouvant être insérées à la connexion des câbles pour le réglage déterminé de la longueur de la bande convoyeuse.

17. Système de tri (1) selon l'une quelconque des revendications précédentes, au moins un tapis de transport roulant dans le sens contraire du sens de transport étant prévu au niveau d'au moins une unité de tri, le tapis étant disposé en particulier latéralement à côté du convoyeur à bande.
